(19) Europäisches Patentamt
European Patent Office
Office européen des brevets

(11) **EP 1 281 169 B1**

(12) **FASCICULE DE BREVET EUROPEEN**

(45) Date de publication et mention
de la délivrance du brevet:
**16.04.2008 Bulletin 2008/16**

(21) Numéro de dépôt: **01934091.8**

(22) Date de dépôt: **11.05.2001**

(51) Int Cl.:
*G09G 3/36* $^{(2006.01)}$    *G02F 1/137* $^{(2006.01)}$

(86) Numéro de dépôt international:
**PCT/FR2001/001428**

(87) Numéro de publication internationale:
**WO 2001/086618 (15.11.2001 Gazette 2001/46)**

(54) **DISPOSITIF BISTABLE D'AFFICHAGE EN REFLEXION**

BISTABILE REFLEKTIONSANZEIGEVORRICHTUNG

BISTABLE REFLECTION DISPLAY DEVICE

(84) Etats contractants désignés:
**AT BE CH CY DE DK ES FI FR GB GR IE IT LI LU MC NL PT SE TR**

(30) Priorité: **12.05.2000 FR 0006107**

(43) Date de publication de la demande:
**05.02.2003 Bulletin 2003/06**

(73) Titulaire: **Nemoptic**
**78114 Magny-Les-Hameaux (FR)**

(72) Inventeurs:
• **DOZOV, Ivan, N.**
**F-91190 Gif-sur-Yvette (FR)**
• **MARTINOT-LAGARDE, Philippe, R.**
**F-91460 Marcoussis (FR)**
• **STOENESCU, Daniel, N.**
**F-91400 Orsay (FR)**

(74) Mandataire: **Texier, Christian et al**
**Cabinet Régimbeau**
**20, rue de Chazelles**
**75847 Paris Cedex 17 (FR)**

(56) Documents cités:
WO-A-99/10870          WO-A-99/34251
FR-A- 2 740 894          US-A- 5 831 700
US-A- 5 995 173

• XIE Z -L ET AL: "REFLECTIVE BISTABLE TWISTED NEMATIC LIQUID CYRSTAL DISPLAY" JAPANESE JOURNAL OF APPLIED PHYSICS, PUBLICATION OFFICE JAPANESE JOURNAL OF APPLIED PHYSICS. TOKYO,JP, vol. 37, no. 5A, mai 1998 (1998-05), pages 2572-2575, XP000965672 ISSN: 0021-4922
• PATENT ABSTRACTS OF JAPAN vol. 2000, no. 03, 30 mars 2000 (2000-03-30) & JP 11 344730 A (SAMSUNG DISPLAY DEVICES CO LTD), 14 décembre 1999 (1999-12-14) -& JP 11 344730 A 14 décembre 1999 (1999-12-14)
• I. DOZOV ET AL.: "FAST BISTABLE NEMATIC DISPLAY FROM COUPLED SURFACE ANCHORING BREAKING" PROCEEDINGS OF THE SPIE, vol. 3015, 1 février 1997 (1997-02-01), pages 61-69, XP001176910

EP 1 281 169 B1

**Description**

La présente invention concerne le domaine des dispositifs d'affichage à cristal liquide.

ETAT DE LA TECHNIQUE

Selon la nature physique du cristal liquide utilisé, on distingue des dispositifs à cristaux liquides nématiques, cholestériques, smectiques, ferroélectriques, etc. Dans les afficheurs nématiques, qui font l'objet préférentiel de la présente invention, on utilise un cristal liquide nématique, achiral ou chiralisé par exemple en ajoutant un dopant chiral. On obtient de cette façon une texture spontanée uniforme ou faiblement tordue, dont le pas de l'hélice est supérieur à quelques micromètres. L'orientation et l'ancrage du cristal liquide à proximité des surfaces sont définis par des couches ou des traitements d'alignement appliqués sur les substrats.

La plupart des dispositifs proposés et réalisés à ce jour sont monostables. En absence de champ électrique, une seule texture est réalisée dans le dispositif. Elle correspond à un minimum absolu de l'énergie totale de la cellule. Sous champ cette texture est déformée continûment et ses propriétés optiques varient en fonction de la tension appliquée. A la coupure du champ, le nématique revient à nouveau dans la seule texture monostable. L'homme de l'art reconnaîtra parmi ces systèmes les modes de fonctionnement les plus répandus des afficheurs nématiques : nématiques tordus (TN), supertordus (STN), à biréfringence électriquement contrôlée (ECB), nématiques verticalement alignés (VAN), etc.

Une autre classe d'afficheurs nématiques est celle des nématiques bistables, multistables ou métastables. Dans ce cas, au moins deux textures distinctes, stables ou métastables en absence de champ, peuvent être réalisées dans la cellule, avec les mêmes ancrages sur les surfaces. On dénomme généralement « bistables » ou « multistables » au moins deux états de même énergie ou d'énergie très proche, susceptibles de durer quasi indéfiniment en l'absence de commande externe. Par contre on dénomme « métastables'» des états de niveaux d'énergie différents, susceptibles de commuter après un temps important de relaxation. La commutation entre les deux états est réalisée par l'application de signaux électriques appropriés. Une fois l'état inscrit, il reste mémorisé en absence de champ grâce à la bistabilité. Cette mémoire des afficheurs bistables est très attractive pour de nombreuses applications. D'un côté, elle permet un faible taux de rafraîchissement des images, très favorable pour diminuer la consommation des appareils portables. D'autre part, pour des applications rapides (par exemple vidéo) la mémoire assure un très fort taux de multiplexage, permettant un affichage vidéo de haute résolution.

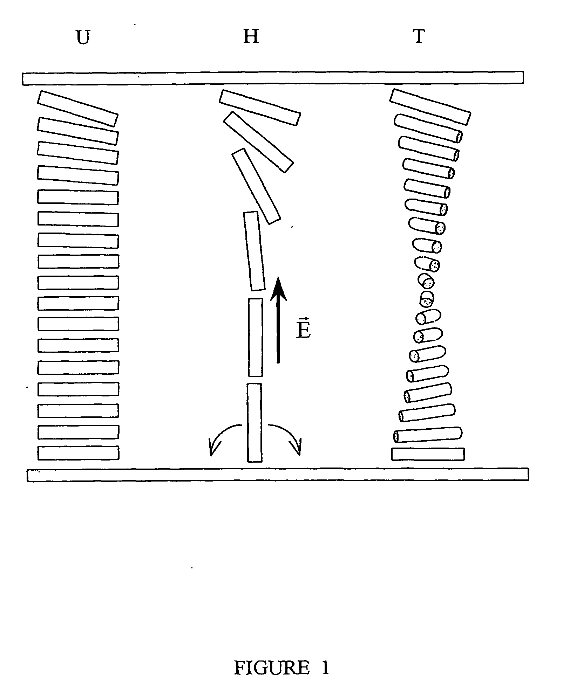

Récemment, un nouvel afficheur bistable [document 1] a été proposé, utilisant un cristal liquide nématique chiralisé ou un cholestérique. Les deux textures bistables, U (uniforme ou faiblement tordue) et T diffèrent entre elles d'une torsion de $\pm 180°$ et sont topologiquement incompatibles (Figure 1). Le pas spontané $p_0$ du nématique est choisi proche de 4 fois l'épaisseur d de la cellule ($p_0 \cong 4.d$) pour rendre les énergies de U et T sensiblement égales. Sans champ, il n'existe aucun autre état avec une énergie plus basse : U et T présentent une vraie bistabilité.

En raison de l'incompatibilité topologique des deux textures bistables, il est impossible de les transformer l'une dans l'autre par une distorsion continue en volume. La commutation entre U et T nécessite donc des transitions d'ancrage sur les surfaces, induites par un fort champ externe. Au-dessus d'un champ électrique seuil $E_c$ (seuil de cassure de l'ancrage), une texture presque homéotrope (référencée H sur la figure 1) est obtenue, avec au moins un des ancrages sur les substrats cassé : les molécules sont normales à la lame au voisinage de cette surface.

A la coupure du champ, les molécules nématiques à proximité de la surface *cassée* se trouvent en équilibre instable, sans aucun couple d'ancrage, et peuvent revenir soit à leur orientation initiale (réalisant la même texture que celle avant l'application du champ), soit tourner à 180° et induire après relaxation une texture de volume avec une torsion supplémentaire de 180°. A la fin de l'impulsion de commande, la cellule est guidée au choix vers l'un ou l'autre des états bistables, selon que le couplage entre les mouvements des molécules près des deux surfaces est élastique ou hydrodynamique : le couplage élastique donne un retour vers l'état U, le couplage hydrodynamique vers l'état T.

Pour que l'information affichée sur le dispositif apparaisse, il est nécessaire que les textures réalisées aient des propriétés optiques différentes. La plupart des dispositifs travaillent en lumière polarisée et utilisent des éléments optiques supplémentaires : des polariseurs, des filtres, des lames compensatrices, etc. Ces éléments et leurs orientations par rapport aux ancrages sur les deux surfaces sont choisis en fonction de la configuration de l'afficheur, de façon à optimiser les performances optiques pertinentes : contraste, luminosité, colorimétrie, angle de vue, etc.

Pour les afficheurs monostables, l'optimisation doit porter sur tout un continuum d'états, réalisés sous champ plus ou moins fort, parce que ces états sont affichés pendant toute la durée d'une image. Un très grand nombre de géométries optiques ont été proposées et réalisées pour des dispositifs différents (TN, STN, etc.), en tenant compte des particularités de chacun de ces afficheurs.

L'optique de l'afficheur bistable à cassure d'ancrage est très différente de celle des dispositifs monostables. D'abord, pendant la plupart de la durée d'une image, seulement deux textures sont réalisées dans chaque élément de l'afficheur : celles correspondant aux deux états bistables. La configuration optimale doit permettre un contraste maximal entre ces deux textures, tout en minimisant les effets optiques transitoires pendant la commutation, dûs au passage rapide par des états intermédiaires sous champ. D'autre part, la différence principale entre les deux textures bistables, la torsion supplémentaire de 180°, n'est pas un paramètre libre pour l'optimisation : elle est imposée par le mécanisme physique de la réalisation des deux états bistables. En plus, la commutation bistable nécessite un fort champ électrique $E > E_c$ (proche de 10 V/$\mu$m) et donc une tension de commande $U = E.d$ qui est proportionnelle à l'épaisseur d de la cellule. La couche de cristal liquide doit donc être très fine ($d \cong 2 - 3 \ \mu$m) pour permettre la commande par des tensions raisonnables et l'optimisation optique doit tenir compte de ces impératifs.

Le document I. DOZOV et al. : "FAST BISTABLE NEMATIC DISPLAY FROM COUPLED SURFACE ANCHORING BREAKING" Proceedings of the Spie, vol. 3015, 1er février 1997 (1997-02-01), pages 61-69, XP001176910 décrit un dispositif d'affichage bistable comprenant un matériau à cristal liquide placé entre deux substrats, chacun des substrats portant une électrode et une couche d'alignement, les couches d'alignement définissant deux états stables, l'un ayant une torsion nulle et l'autre ayant une torsion de l'ordre de 180° et un polariseur placé sur la face avant du dispositif, le retard optique de la couche du cristal liquide étant choisi pour être $\lambda$/2, $\lambda$ étant la longueur d'onde centrale du spectre visible.

Le document PATENT ABSTRACTS OF JAPAN, vol. 2000, n° 03, 30 mars 2000 (2000-03-30) & JP 11 344730 A (SAMSUNG DISPLAY DEVICES CO LTD), 14 décembre 1999, décrit un dispositif d'affichage bistable réflectif.

BASE DE L'INVENTION

La présente invention a maintenant pour but de proposer un nouveau dispositif d'affichage à base de cristaux liquides, qui présente des propriétés supérieures à celles des dispositifs antérieurs connus.

Ce but est atteint dans le cadre de la présente invention, grâce à un dispositif bistable d'affichage du type défini en revendication 1 annexée.

L'afficheur bistable en réflexion ainsi proposé selon la présente invention offre de nombreux avantages.

En particulier il peut garder et afficher une image pendant très longtemps sans aucune consommation d'énergie, ni pour son fonctionnement (il est bistable), ni pour son éclairage (il ne nécessite pas de source de lumière interne).

Ce dispositif bistable en réflexion peut être optimisé en tenant compte de différents paramètres. Avec un seul polariseur, il permet plusieurs configurations, qui assurent un contraste de 50 à 60 en lumière blanche. Sans perte de qualité optique, l'optimisation permet aussi d'utiliser une épaisseur minimale de la cellule, ce qui rend la commutation plus rapide et réduit les tensions de commande nécessaires pour la commutation.

Selon d'autres caractéristiques de l'invention :

- le matériau cristal liquide comprend un cristal liquide ou un mélange de cristal liquide dans une phase nématique,
- le matériau cristal liquide comprend un cristal liquide ou un mélange de cristal liquide dans une phase cholestérique ou nématique dopée par une substance chirale, pour permettre de rapprocher ou d'égaliser les énergies de certaines textures parmi les textures stables ou métastables,
- le retard optique $d \Delta n$ de la couche cristal liquide est dans les limites $0,20\lambda_0 \div 0,32 \cdot \lambda_0$, où $\lambda_0$ est la longueur d'onde médiane de la bande spectrale utile,
- le polariseur est un polariseur linéaire ou elliptique,
- au moins une des électrodes contient plusieurs segments différents pour permettre de réaliser plusieurs éléments d'image (pixels) indépendants sur les mêmes substrats et dans le même dispositif,
- les éléments d'image (pixels) indépendants sont munis des moyens indépendants pour appliquer le champ,
- les éléments d'image (pixels) indépendants sont organisés dans une matrice passive multiplexée,
- les éléments d'image (pixels) indépendants sont organisés dans une matrice active multiplexée,
- le polariseur est orienté à un angle proche de 45° par rapport au directeur du cristal liquide sur la face avant du dispositif,
- l'angle de torsion de la première texture est pratiquement nul ($\Delta\Phi \cong 0$),
- l'axe optique de la lame compensatrice est orienté sensiblement à 45° par rapport au polariseur,
- le cristal liquide ntroduit un retard optique compris entre 100 nm et 180 nm,
- la lame compensatrice introduit un retard optique inférieur à 50nm,
- le polariseur est combiné avec la lame compensatrice sous forme d'un élément unique pour réaliser un polariseur elliptique,
- l'épaisseur du matériau cristal liquide est inférieure à 6 $\mu$m.

D'autres caractéristiques, buts et avantages de la présente invention, apparaitront à la lecture de la description détaillée qui va suivre et en regard des dessins annexés donnés à titre d'exemples non limitatifs, et sur lesquels :

- la figure 1 précédemment décrite représente schématiquement les trois états susceptibles d'être obtenus avec un afficheur conforme à l'état de la technique,

- la figure 2 représente schématiquement une vue en perspective d'un dispositif conforme à la présente invention,
- la figure 3 schématise l'aller et retour de la lumière, grâce au réflecteur, dans le dispositif conforme à la présente invention,
- les figures 4 et 5 schématisent différentes solutions d'équations, en fonction de l'orientation du polariseur, qui seront explicitées par la suite,
- la figure 6 illustre une branche particulière d'une solution conforme à la présente invention donnant un bon contraste en lumière blanche,
- la figure 7 représente la réflectivité R autour de la première branche, calculée à $d$, $\Delta n$ et $\Delta\Phi$ fixes à $\lambda_0/\lambda$ variable,
- la figure 8 représente les réflectivités $R(P,\lambda_0/\lambda)$ d'états "blancs" pour une branche donnée de solution,
- la figure 9 présente la réflectivité de deux états en fonction de $\lambda/\lambda_0$ pour une configuration optimale du dispositif en réflexion conforme à la présente invention,
- la figure 10 présente des courbes colorimétriques, calculées pour une source standard D65, en fonction de $d.\Delta n$,
- la figure 11 représente le contraste calculé en lumière blanche,
- la figure 12 représente schématiquement en perspective un dispositif conforme à la présente invention incorporant une lame compensatrice additionnelle,
- les figures 13 et 14 représentent différentes solutions d'optimisation qui seront explicitées par la suite,
- la figure 15 présente la réflectivité d'états tordus correspondants, et
- la figure 16 représente la réflectivité de deux états.

PARTIE DESCRIPTIVE

Comme les autres afficheurs en réflexion, les dispositifs bistables peuvent être réalisés en de nombreuses configurations, avec un seul ou avec deux polariseurs, avec une ou plusieurs lames compensatrices, etc. Dans la présente invention le dispositif comprend un seul polariseur, placé sur le chemin de la lumière, sur la face avant du dispositif. Cette configuration a l'important avantage d'une luminosité maximale, parce qu'elle minimise les pertes de lumière dues à un éventuel deuxième polariseur.

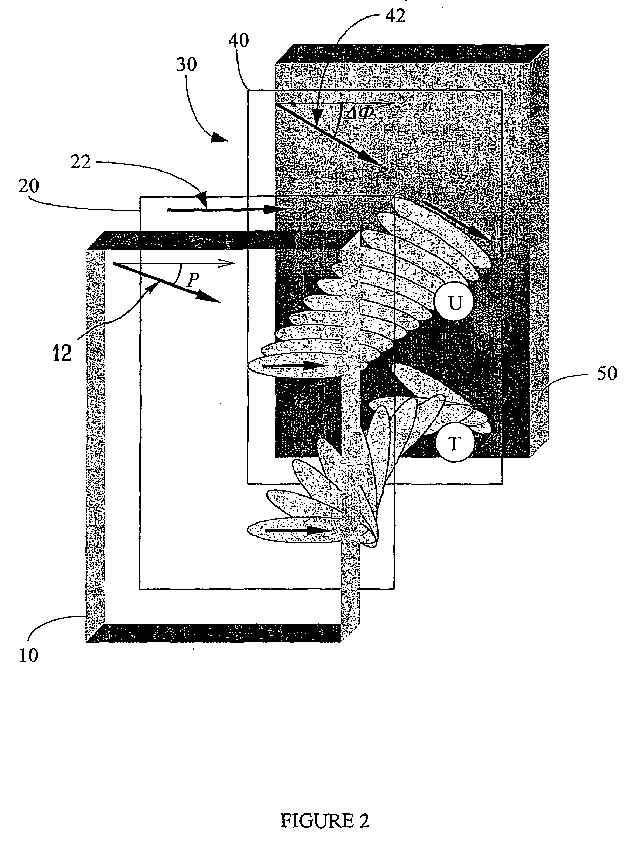

La configuration la plus simple du dispositif conforme à la présente invention, comprend seulement, comme illustré sur la figure 2, un polariseur 10 en face avant et un miroir 50 en face arrière de la couche de cristal liquide 30 placé entre deux substrats 20, 40, munis d'électrodes sur leurs surfaces internes, sans aucun élément optique supplémentaire (par exemple lame compensatrice).

Sur la figure 2, l'orientation du polariseur 10 est référencée 12, les directions d'alignement définies respectivement sur chacun des deux substrats 20, 40 sont référencées 22 et 42 (soit un angle de torsion $\Delta\Phi$), et l'on a schématisé les deux états U et T susceptibles d'être occupés par le matériau cristal liquide 30.

Pour optimiser le dispositif conforme à la présente invention, on peut jouer sur tous les paramètres qui définissent les propriétés optiques de l'afficheur: l'angle de torsion $\Delta\Phi_0$ de la texture dans l'état U de faible torsion ($|\Delta\Phi_0| \leq 180°$), la torsion supplémentaire $\pm$ 180° dans le deuxième état bistable T, l'orientation P du polariseur 10 par rapport à l'alignement du cristal liquide 30 sur la face avant 20 (-90°$\leq$ P $\leq$90°), l'épaisseur d du matériau cristal liquide 30 placé entre les deux substrats 20 et 40 et la biréfringence $\triangle$n du cristal liquide.

Ces paramètres seront choisis de façon à obtenir des performances optiques optimales du dispositif, notamment contraste, luminance, colorimétrie, etc.

Une particularité des afficheurs bistables est le fait que la plupart du temps seulement deux états sont réalisés et donc seulement ces deux états bistables doivent être optimisés optiquement.

On va démontrer qu'en général, pour n'importe quelle orientation P du polariseur 10, plusieurs solutions vont donner des performances optiques optimales. Le choix entre ces solutions va permettre d'optimiser aussi la commutation du cristal liquide, par exemple en diminuant l'épaisseur d de la couche 30, sans perte de qualité optique.

En effet, les dispositifs bistables nécessitent l'application d'un champ électrique E très fort, proche de 10 V/$\mu$m, imposé par les seuils habituels très élevés des cassures des ancrages. Les tensions de commande U = d E sont donc grandes par rapport aux afficheurs traditionnels. Une diminution de l'épaisseur va permettre de baisser U du même facteur.

Les temps optiques de relaxation après la commutation, proportionnels à $d^2$, sont aussi favorablement raccourcis à faible d, ce qui est très important pour des applications rapides, par exemple pour l'affichage vidéo.

Finalement, la commutation des nématiques bistables est commandée par les écoulements hydrodynamiques de cisaillement, lancés à la fin de l'impulsion de commande et par les faibles couplages élastiques entre les deux ancrages de surface. Une épaisseur faible du cristal liquide renforce les couplages hydrodynamiques et élastiques et donc favorise une commande plus efficace de l'afficheur.

L'homme de l'art comprendra l'importance de la configuration optimale présentée dans cette invention, qui permet d'améliorer à la fois la qualité optique, la rapidité, la tension de commande et la commutation du dispositif entre les deux états bistables.

EP 1 281 169 B1

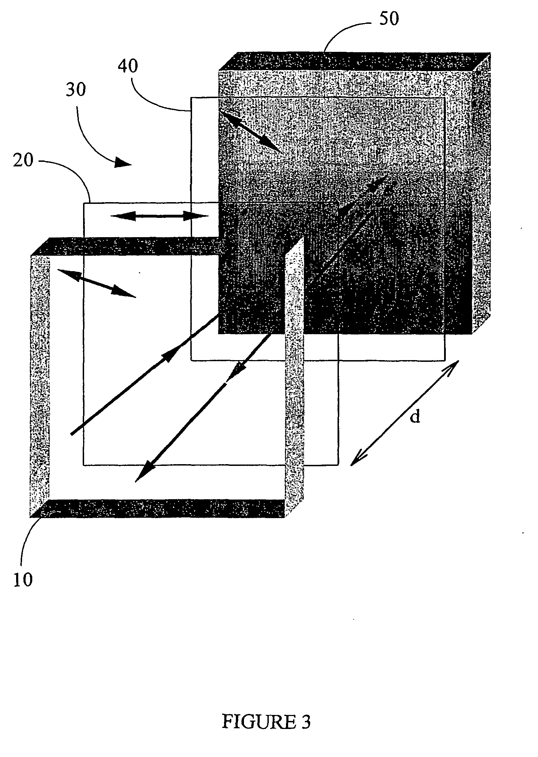

Pour une texture uniformément tordue, dont le pas d'hélice est nettement plus grand que la longueur d'onde de la lumière, quand la propagation est parallèle à l'axe de l'hélice, il existe des formules analytiques bien connues [document 2], qui décrivent avec une bonne approximation les propriétés optiques du système. En tenant compte du double passage de la lumière dans le dispositif (comme on l'a schématisé sur la figure 3) et en supposant un polariseur 10 et un miroir 50 parfaits, nous obtenons les formules suivantes pour la réflectivité de l'afficheur :

$$R=1-\cos^2(\varepsilon)\cos^2(2P-\alpha) \qquad\qquad (1)$$

où

$$\sin\left(\frac{\varepsilon}{2}\right)=\frac{\pi\xi}{\sqrt{\Delta\Phi^2+\pi^2\xi^2}}\sin\left(\sqrt{\Delta\Phi^2+\pi^2\xi^2}\right) \qquad\qquad (2.a)$$

$$\tan(\alpha)=\frac{\Delta\Phi}{\sqrt{\Delta\Phi^2+\pi^2\xi^2}}\tan\left(\sqrt{\Delta\Phi^2+\pi^2\xi^2}\right) \qquad\qquad (2.b)$$

$$\xi=\frac{d\cdot\Delta n}{\lambda} \qquad\qquad (2.c)$$

$\varepsilon$ et $\alpha$ sont des fonctions de la biréfringence intégrée du cristal liquide $d\cdot\Delta n$, de la longueur d'onde de la lumière $\lambda$, de l'angle de torsion de l'état $\Delta\Phi$ et de l'orientation du polariseur P.

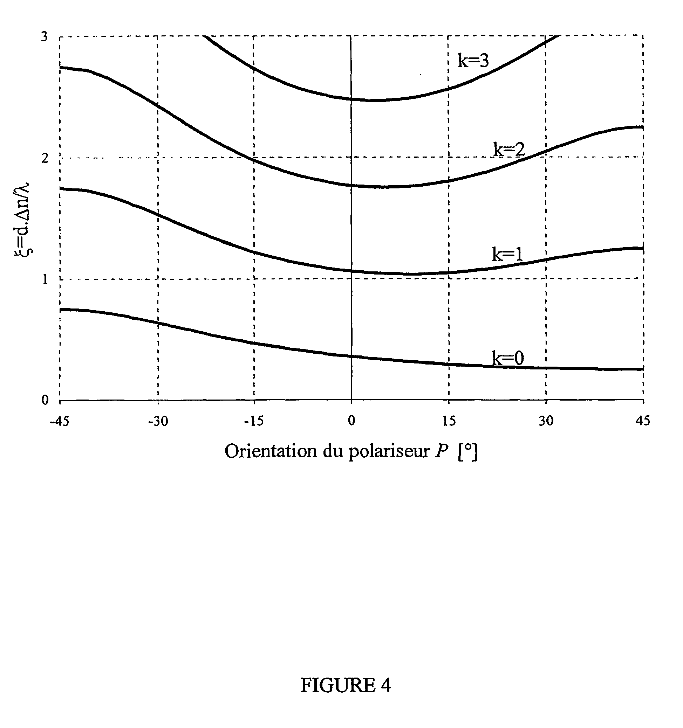

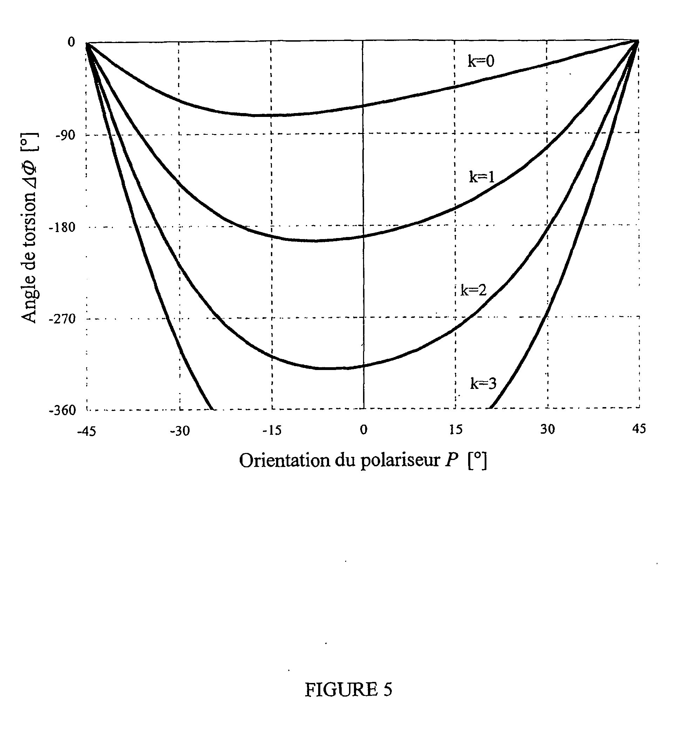

Pour obtenir un contraste optimal en lumière monochromatique il faut qu'un des états bistables, de torsion $\Delta\Phi$ ou $\Delta\Phi\pm\pi$ soit noir (R = 0). Pour chaque orientation du polariseur 10, l'équation (1) présente une série de solutions ($\xi_k$, $\Delta\Phi_k$) qui assurent cette condition (Figures 4 et 5). Les premières branches (k=0,1,2 ou 3) des solutions $\xi_k(P)$ et $\Delta\Phi_k(P)$ sont présentées sur les figures 4 et 5 où pour simplicité on se limite aux orientations du polariseur 10 : -45°≤P≤+45° et à la torsion de la cellule : $\triangle\Phi$ <0. Les solutions avec $\Delta\Phi$ >0 correspondent à 45°≤P≤135° et peuvent être obtenues sur la même figure par la transformation

$$\begin{cases} \xi_k(90°-P)=\xi_k(P) \\ \Delta\Phi_k(90°-P)=\Delta\Phi_k(P) \end{cases} \qquad\qquad (3)$$

Toutes ces solutions correspondent à un contraste infini en lumière monochromatique avec $\lambda_0=d\cdot\Delta n/\xi_k$. En pratique, on demande à l'afficheur d'assurer un bon contraste aussi en lumière blanche, i.e. quand $\lambda$ varie autour de $\lambda_k$ (à $P$ et $\Delta\Phi$ fixes) $R$ doit rester proche de zéro.

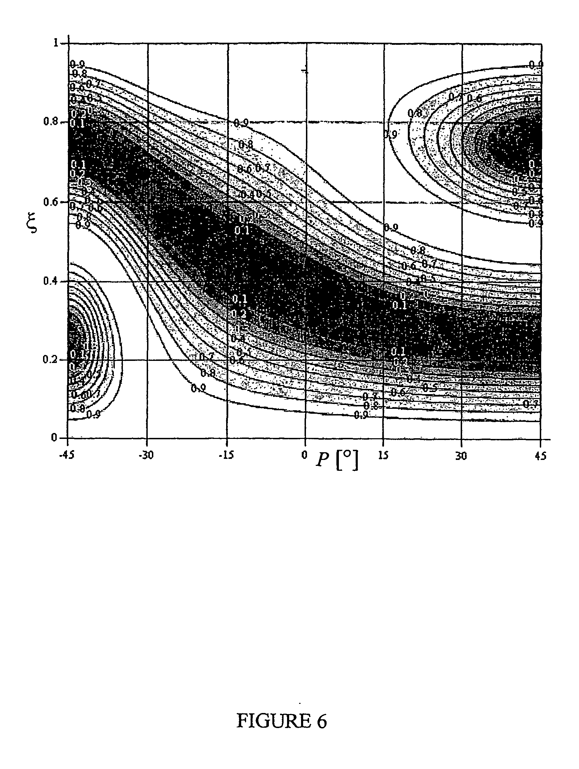

La première branche ($\xi_0$, $\Delta\Phi_0$) présentée sur la figure 6 satisfait le mieux ce critère et correspond à un contraste en lumière blanche très supérieur aux autres branches. Plus bas on ne va considérer que cette solution.

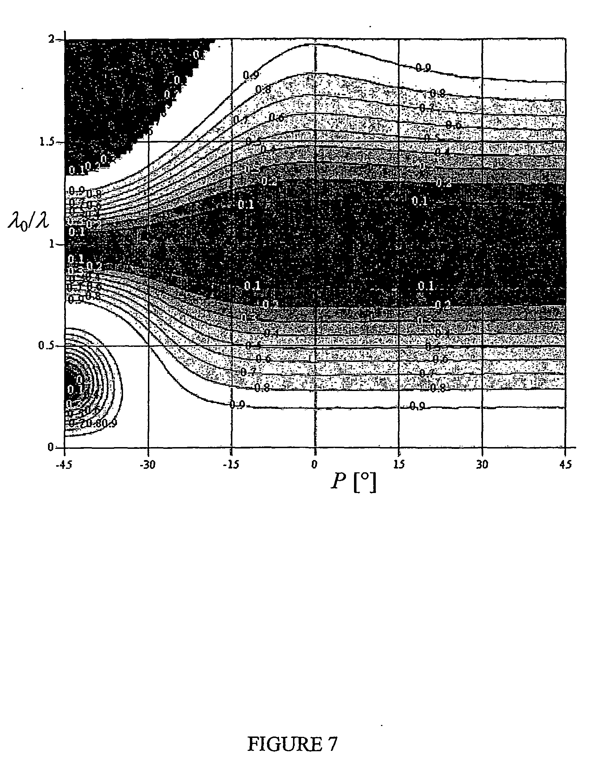

Sur la Figure 7 est présentée la réflectivité $R$ autour de la première branche, calculée à d, $\Delta n$ et $\Delta\Phi$ fixes à $\lambda_0/\lambda$ variable. Pour $P$ compris entre -10° et +45° (ou entre 45° et 100° si $\Delta\Phi$ < 0) la fenêtre correspondant à une basse réflectivité autour de la branche est large et presque indépendante de P. Cette région correspond à une qualité optique optimale de l'état noir de l'afficheur en lumière blanche (faible réflectivité moyenne et faible dépendance en $\lambda$).

On voit que dans cette configuration l'optimisation de l'état noir n'impose pas une orientation particulière du polariseur 10 mais seulement - 10° ≤ $P$ ≤ +100°. On peut donc utiliser la liberté de choix de P pour optimiser, à qualité optique égale, l'épaisseur d de la couche de cristal liquide 30, une épaisseur minimale étant favorable pour améliorer la commutation.

Sur la figure 5 on voit directement que cette épaisseur minimale d = $\lambda$ / (4$\Delta n$) est obtenue pour $P$ = 45° et qu'elle varie lentement dans la région +15° < $P$ < +75°.

Cette épaisseur est deux fois plus petite que la valeur optimale en transmission [document 1] ou réflexion avec deux polariseurs.

Le dispositif conforme à la présente invention permet donc, avec P proche à 45° , de baisser les tensions de commande par un facteur deux, tout en gardant une bonne qualité optique. Les temps de relaxation après la coupure du champs sont divisés par quatre et peuvent devenir de l'ordre d'une milliseconde, compatibles avec l'affichage vidéo haute résolution.

Pour l'état bistable "blanc" du dispositif, on demande une réflectivité forte, de préférence R = 1, et une faible dispersion en longueur d'onde. Ces deux conditions assurent une luminance maximale et une bonne colorimétrie de l'état blanc. La seule différence entre l'état noir (déjà optimisé) et l'état blanc (à optimiser) est une torsion supplémentaire de $\pm$ 180°.

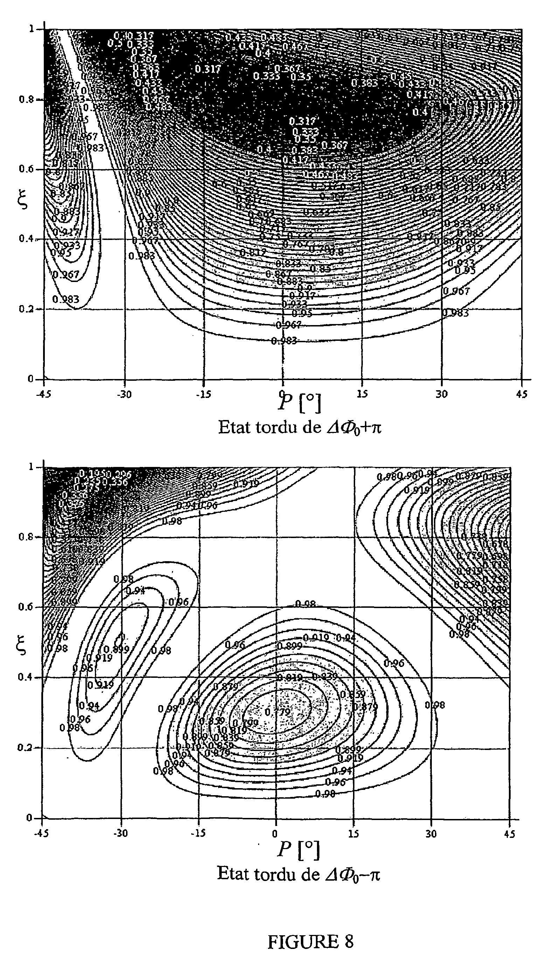

Sur la figure 8 on a présenté les réflectivités $R(P,\lambda_0/\lambda)$ des états "blancs" qui correspondent à la branche zéro de l'état noir déjà optimisé. On voit que dans tous les cas R est très proche de 1 et dépend très peu de $\lambda_0/\lambda$ pour +15° <$P$< +75°.

Cela confirme l'intérêt de la configuration optimale de l'afficheur bistable en réflexion conforme à la présente invention avec $P\cong\pm$ 45° , $d\cong \lambda_0 / 4 \cdot \Delta n$ (ou $\lambda_0$ est choisi proche de la médiane de la bande passante de l'afficheur) et $\Delta\Phi\cong 0$ pour l'état de faible torsion. En effet, cette configuration optimise non seulement l'optique des deux états bistables, mais aussi permet d'utiliser une épaisseur minimale de la couche de cristal liquide 30, et améliore par conséquent la commutation entre les deux états.

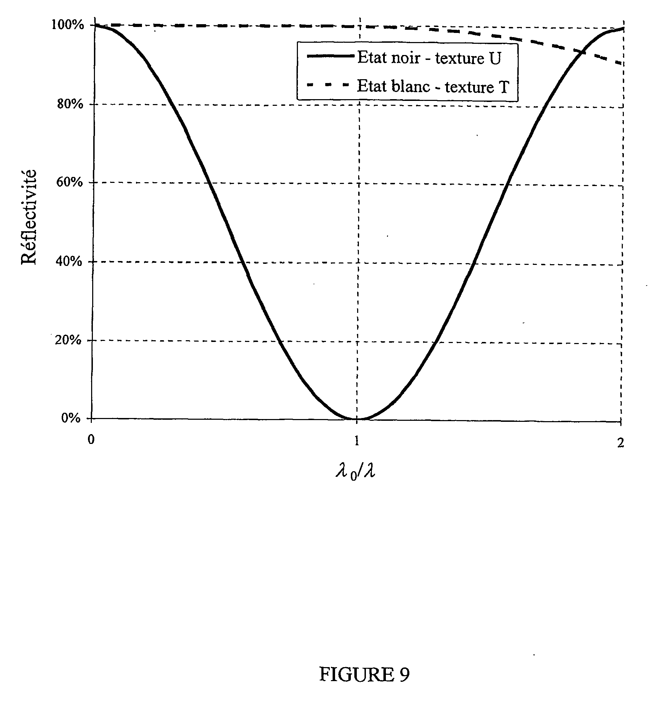

Sur la figure 9 on présente la réflectivité des deux états pour $P$=45°, en fonction de $\lambda/\lambda_0$ pour la configuration optimale du dispositif en réflexion.

La réflectivité de l'état blanc ou texture T ($\Delta\Phi$ =180°) varie très lentement autour de $\lambda = \lambda_0$. Par contre, l'état noir ou texture U ($\Delta\Phi$ =0°) a une dispersion R($\lambda$) non négligeable, qui diminue le contraste en lumière blanche et donne un état *noir* coloré.

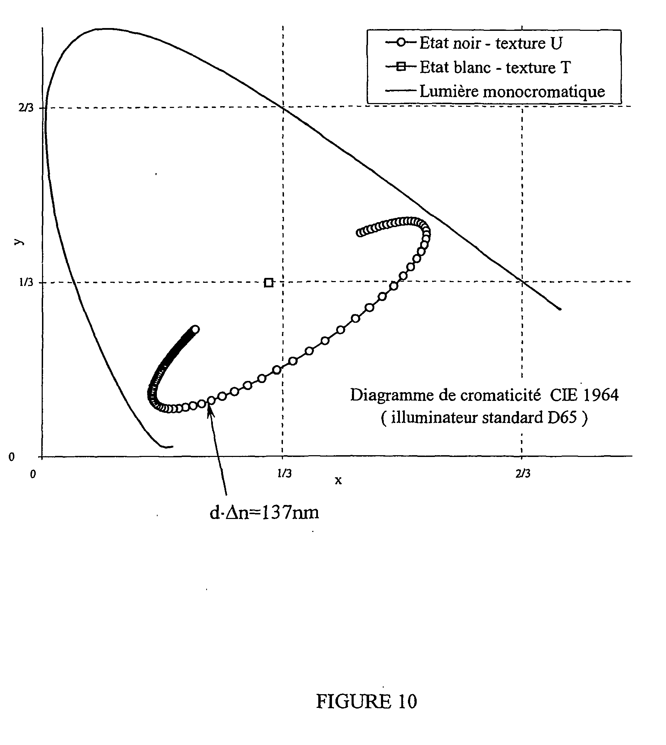

Sur la figure 10 on présente les courbes colorimétriques, calculées pour une source standard D65, en fonction de $d\cdot\Delta n$. L'état clair ($\Delta\Phi$ =180°) est très proche du blanc parfait, mais l'état sombre ($\Delta\Phi$=0) est coloré.

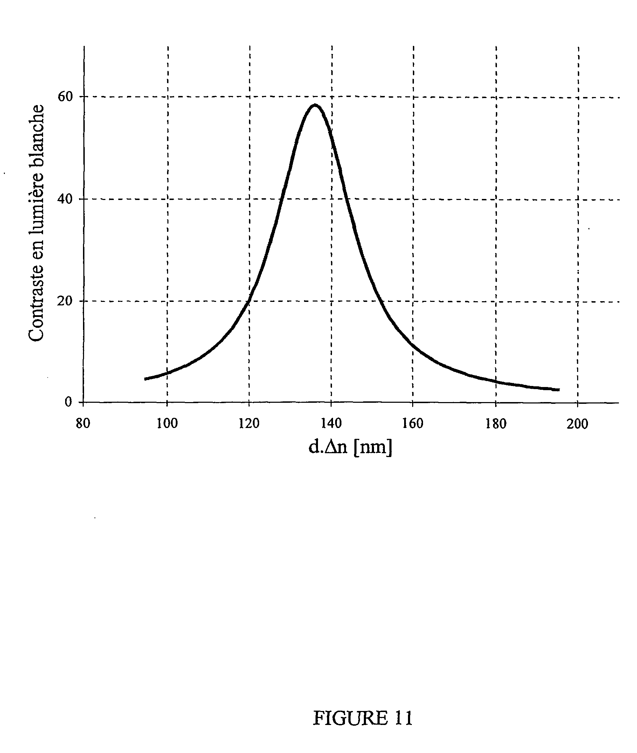

Le contraste calculé en lumière blanche (figure 11) est optimal (-57) pour $d\cdot\Delta n$ =137nm, correspondant à une couleur bleue très foncée de l'état sombre $\Delta\Phi$ =0.

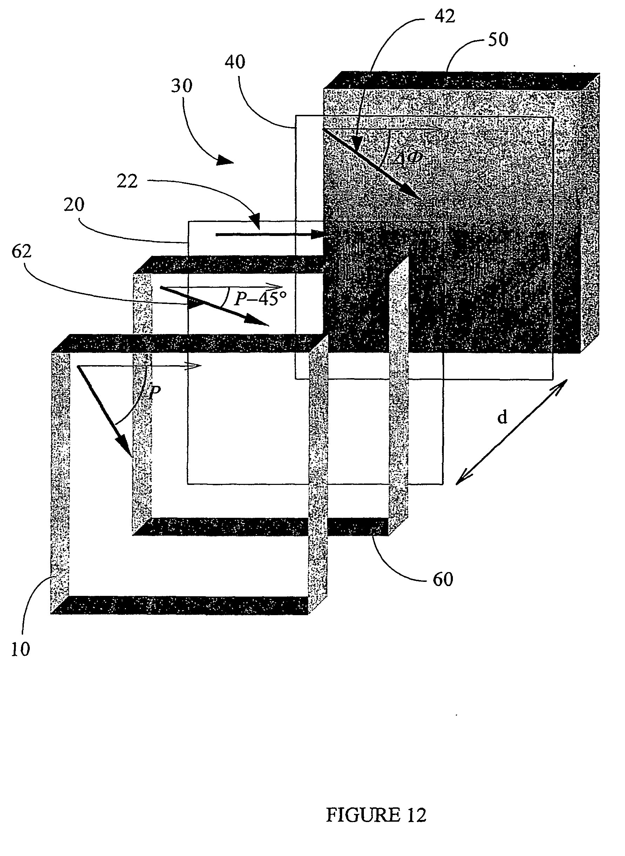

Selon une variante comme illustré sur la figure 12, une amélioration supplémentaire de l'afficheur bistable en réflexion proposé dans la présente invention comporte une lame compensatrice 60 de faible épaisseur optique, introduite entre le polariseur 10 et le réflecteur 50, à l'intérieur ou à l'extérieur du dispositif. L'axe optique 62 de cette lame compensatrice 60 uniaxe est choisi essentiellement à 45° par rapport au polariseur 10.

La différence de chemin optique introduite par le compensateur 60 en un seul passage de la lumière à travers lui est $d_c\Delta n_c$, où de est son épaisseur et $\Delta n_c$, sa biréfringence (positive ou négative). Le déphasage angulaire correspondant est défini par $\delta_c=2\pi d_c\Delta n_c/\lambda_0$ où $\lambda_o$ est la longueur d'onde de la lumière au centre de la bande spectrale, pour laquelle le dispositif doit être optimisé.

Qualitativement, le rôle de la lame compensatrice 60 de faible déphasage est le suivant. Il a été déjà démontré que la configuration optique optimale du dispositif correspond à une épaisseur optique de l'état U proche de d. $\Delta n = \lambda_0/4$. Pourtant, pour la commutation du dispositif il est préférable de baisser le plus possible l'épaisseur d du nématique 30. Ces deux conditions peuvent être satisfaites simultanément en remplaçant une partie du déphasage du cristal liquide 30 par un déphasage introduit par la lame compensatrice 60 :

$$d' \cdot \Delta n + \delta_c = \lambda_0/4$$

où d'< $\lambda_0$/(4. $\Delta n$) est une épaisseur plus faible. L'état noir dans ce cas va conserver ses propriétés optiques. La colorimétrie et la luminosité de l'état blanc vont être légèrement dégradées, mais cet effet indésirable peut être rattrapé par le choix optimal des paramètres P et $\Delta\Phi$ si le déphasage $\delta_c=2\pi d_c\Delta n_c/\lambda_0$ est petit (<< 1 radian).

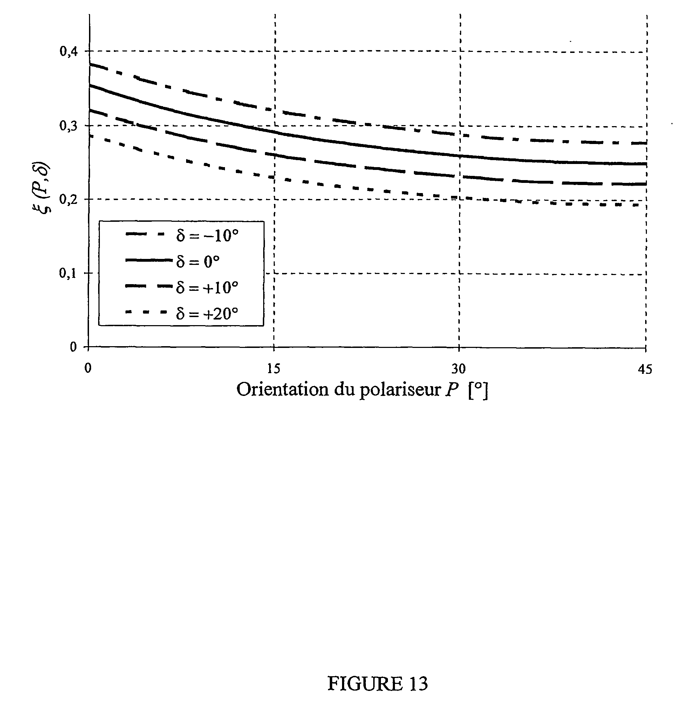

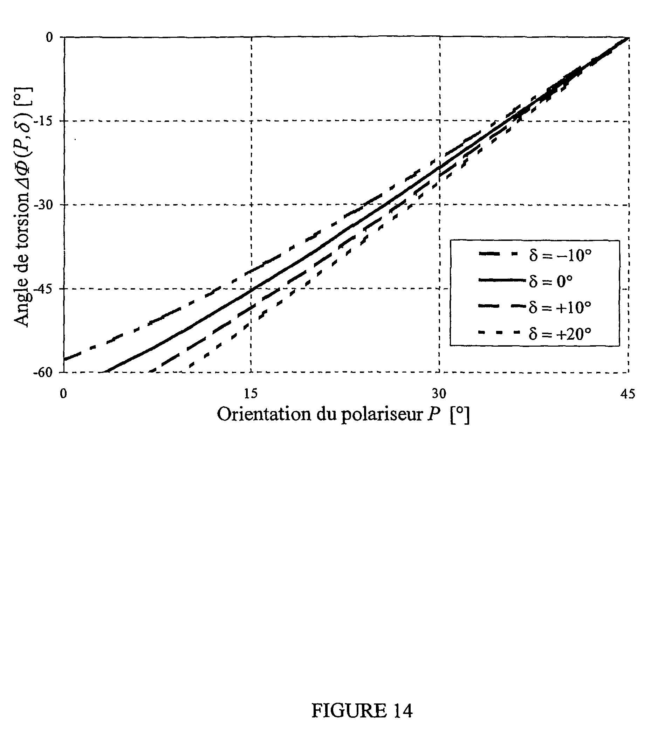

Sur les figures 13 et 14 on présente les premières branches des solutions $\xi(P,\delta)$ et $\Delta\Phi(P,\delta)$ calculées pour $R$ ($\Delta\Phi$)=0 et pour $\delta$= -10°, 0°, +10° et +20°.

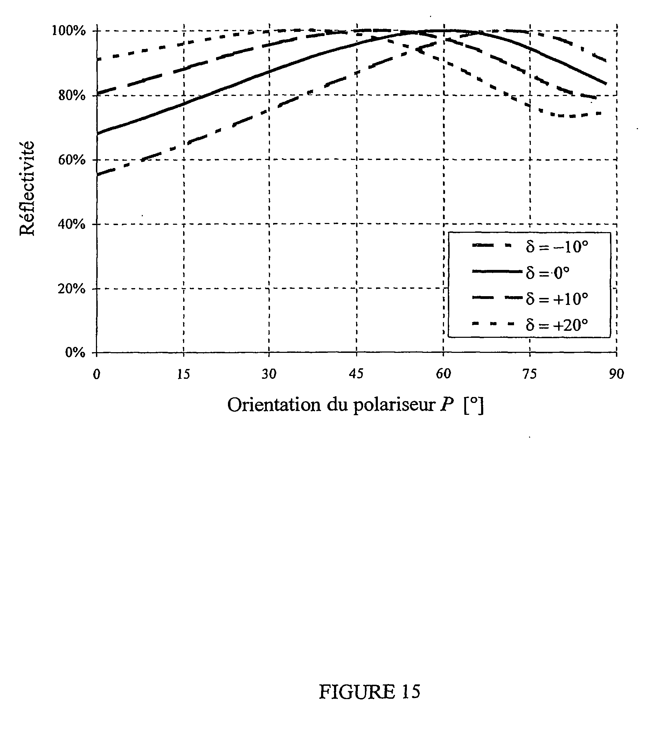

Sur la figure 15 on présente la réflectivité des états tordus $R(\Delta\Phi-\pi)$ correspondants (des résultats similaires sont obtenus pour $\Delta\Phi+\pi)$.

L'homme de l'art comprendra grâce à ces figures que l'introduction d'un faible déphasage positif ($\delta$ =15°) permet de diminuer encore l'épaisseur de la couche de cristal liquide 30.

Pour un déphasage plus grand, l'état clair $\Delta\Phi\pm\pi$ devient progressivement moins lumineux et fortement coloré, ce qui diminue la qualité optique de l'afficheur.

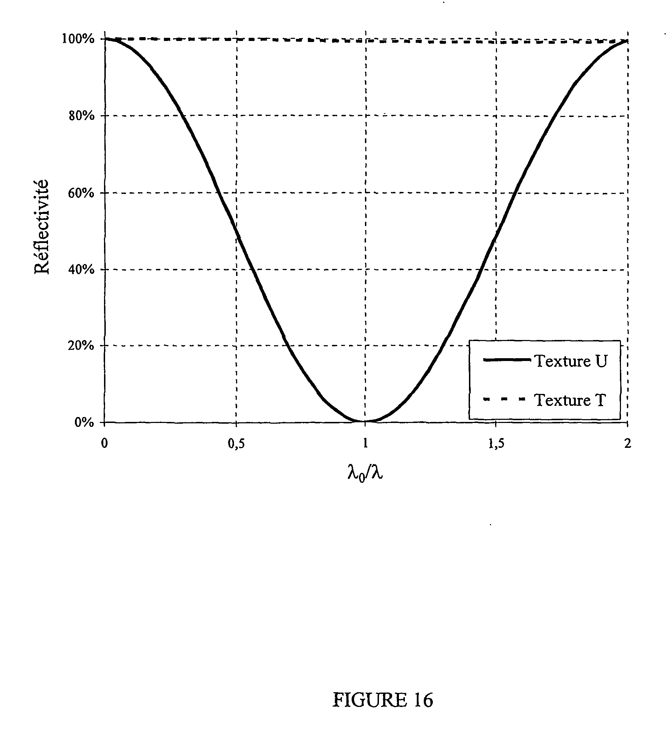

Sur la figure 16 on présente les réflectivités des deux états $\Delta\Phi$ et $\Delta\Phi-\pi$ calculées pour $\Delta\Phi$= -25,4° , $P$=30°, $\delta$

15°, $\lambda_0$=560nm, $\xi(\lambda_0)$=0.217 en fonction de $\lambda_0/\lambda$. Cette configuration optimisée à une qualité optique comparable au cas sans compensateur 60 ($\delta_o$=0), tout en permettant d'utiliser une épaisseur de la couche de cristal liquide 30 plus fine d'environ 15%.

Dans les calculs qui précèdent, on suppose que la dispersion d$\Delta n_c$/d$\lambda$ du compensateur 60 est similaire à celle d$\Delta n$/d$\lambda$ du cristal liquide 30 lui-même. En pratique, le choix judicieux de la dispersion du compensateur 60 (par exemple avec le signe opposé) peut donner des avantages supplémentaires, notamment une dispersion plus faible de l'état noir du dispositif et donc un meilleur contraste en lumière blanche.

Exemple de réalisation:

Un exemple non limitatif du dispositif proposé dans la présente invention a été réalisé et étudié par les inventeurs. Pour démontrer ses avantages il a été comparé à une cellule bistable par cassure d'ancrage optimisée pour l'affichage en transmission.

Dans les deux cas un des ancrages sur les surfaces 20, 40 est fort et avec un angle d'inclinaison d'environ 30° (évaporation rasante de SiO à 85°). Sur l'autre surface un ancrage planaire plus faible a été imposé par évaporation de SiO à 75°. Le nématique commercial 5CB (Merck) a été chiralisé en rajoutant le dopant chiral S 811 (Merck). La concentration retenue pour chacune des deux cellules a été adaptée pour obtenir un pas spontané du mélange $P_0$=4.d (d=1.5 $\mu$m pour la cellule en transmission conforme à l'état de la technique et d=0.85 $\mu$m pour la cellule en réflexion conforme à la présente invention).

Les seuils statiques de cassure de l'ancrage mesurés sur la lame d'ancrage faible pour les deux cellules ont été comparables ($E_c$= 7 V/$\mu$m). La commutation reproductible entre les deux états bistables U et T était réalisée avec les mêmes signaux électriques pour les deux dispositifs, mais avec des tensions très différentes : U=18 V pour la cellule en transmission conforme à l'état de la technique (d=1.5 $\mu$m) et U=8 V pour la cellule en réflexion proposée dans la présente invention (d=0.85 $\mu$m). Les temps de relaxation optique après la commutation, mesurés dans la cellule en réflexion conforme à la présente invention ($\tau$= 2 ms) sont aussi très inférieurs à ceux dans la cellule en transmission conforme à l'état de la technique ($\tau$= 6 ms). Ces résultats confirment le grand intérêt appliqué que représente la configuration en réflexion proposée dans la présente invention.

[1] FR-A-2 740 894

[2] Appl. Phys. Lett. 51 (18) Nov 1987 « Optical properties of general twisted nematic liquid-crystal displays », H. L. Ong

**Revendications**

1. Dispositif bistable d'affichage comprenant:

   a) un matériau cristal liquide (30) contenu entre deux substrats parallèles (20, 40), munis d'électrodes sur leurs surfaces intérieures en regard, pour permettre d'appliquer un champ électrique sur .le dit cristal liquide, au moins le substrat frontal (20) et l'électrode frontale étant optiquement transparents,
   b) des couches ou des traitements d'alignement sur les électrodes, qui orientent le cristal liquide et permettent la réalisation alternative d'au moins deux textures distinctes stables ou métastables en absence de champ, où une des textures est soit non-tordue soit tordue à un angle total compris entre - 90° et + 90°, et l'autre texture présente une torsion supplémentaire d'un angle proche de 180°,
   c) des moyens conçus pour appliquer, sur le cristal liquide, des signaux électriques qui permettent de commuter par cassure de l'ancrage sur au moins un des deux substrats, entre les dites textures distinctes et de rester dans une d'entre-elles après l'enlèvement du champ,
   d) un polariseur (10), associé à la face avant du dispositif, placé à l'intérieur ou à l'extérieur de celle-ci, **caractérisé par le fait que** le dispositif travaille en réflexion, que l'épaisseur d de la couche de cristal liquide (30) est choisie telle que le retard optique $d.\Delta n$ est compris entre 0,15 $\lambda_o$ et 0,35 où $\lambda_o$ est la longueur d'onde médiane de la bande spectrale utile de l'afficheur et $\Delta n$ est la biréfringence du cristal liquide pour cette longueur d'onde, or que le polariseur est orienté à un angle compris entre 15° et 75° par rapport au directeur du cristal liquide sur la face avant du dispositif, que le dispositif comprend en outre
   e) un élément (50) réflectif, spéculaire ou diffusant, placé sur la face arrière du cristal liquide, à l'intérieur ou à l'extérieur du dispositif, permettant à la lumière de passer deux fois dans le dispositif et de retourner vers un observateur ou vers des éléments optiques supplémentaires et qu'une lame compensatrice (60) est introduite dans le chemin optique entre le polariseur (10) et le réflecteur (50), à l'intérieur ou à l'extérieur du dispositif, avec un retard optique $\Delta I$ inférieur à $\lambda_0$/12 où $\lambda_0$ est la longueur d'onde médiane de la bande spectrale utile.

**2.** Dispositif selon la revendication 1, **caractérisé par le fait que** le matériau cristal liquide (30) comprend un cristal liquide ou un mélange de cristal liquide dans une phase nématique.

**3.** Dispositif selon la revendication 1, **caractérisé par le fait que** le matériau cristal liquide (30) comprend un cristal liquide ou un mélange de cristal liquide dans une phase cholestérique ou nématique dopée par une substance chirale, pour permettre de rapprocher ou d'égaliser les énergies de certaines textures parmi les textures stables ou métastables.

**4.** Dispositif selon l'une des revendications 1 à 3, **caractérisé par le fait que** le retard optique $d \, \Delta n$ de la couche cristal liquide (30) est dans les limites $0,20 \cdot \lambda_0$ à $0,32 \cdot \lambda_0$, où $\lambda_0$ est la longueur d'onde médiane de la bande spectrale utile.

**5.** Dispositif selon l'une des revendications 1 à 4, **caractérisé par le fait que** le polariseur (10) est un polariseur linéaire ou elliptique.

**6.** Dispositif selon l'une des revendications 1 à 5, **caractérisé par le fait que** au moins une des électrodes contient plusieurs segments différents pour permettre de réaliser plusieurs éléments d'image (pixels) indépendants sur les mêmes substrats et dans le même dispositif.

**7.** Dispositif selon la revendication 6, **caractérisé par le fait que** les éléments d'image (pixels) indépendants sont munis des moyens indépendants pour appliquer le champ.

**8.** Dispositif selon l'une des revendications 6 ou 7, **caractérisé par le fait que** les éléments d'image (pixels) indépendants sont organisés dans une matrice passive multiplexée.

**9.** Dispositif selon l'une des revendications 6 ou 7, **caractérisé par le fait que** les éléments d'image (pixels) indépendants sont organisés dans une matrice active multiplexée.

**10.** Dispositif selon l'une des revendications 1 à 9, **caractérisé par le fait que** le polariseur (10) est orienté à un angle proche de 45° par rapport au directeur du cristal liquide sur la face avant du dispositif.

**11.** Dispositif selon la revendication 10, **caractérisé par le fait que** l'angle de torsion de la première texture est pratiquement nul ($\Delta\Phi = 0$).

**12.** Dispositif selon l'une des revendication 1 à 11, **caractérisé par le fait que** l'axe optique (62) de la lame compensatrice (60) est orienté sensiblement à 45° par rapport au polariseur (10).

**13.** Dispositif selon l'une des revendications 1 à 12, **caractérisé par le fait que** le cristal liquide (30) introduit un retard optique compris entre 100 nm et 180 nm.

**14.** Dispositif selon l'une des revendications 1 à 13, **caractérisé par le fait que** la lame compensatrice (60) introduit un retard optique inférieur à 50nm.

**15.** Dispositif selon l'une des revendications 1 à 14, **caractérisé par le fait que** le polariseur (10), est combiné avec la lame compensatrice (60) sous forme d'un élément unique pour réaliser un polariseur elliptique.

**16.** Dispositif selon l'une des revendications 1 à 15, **caractérisé par le fait que** l'épaisseur du matériau cristal liquide (30) est inférieure à 6 $\mu$m.

**Claims**

**1.** A bistable display device comprising:

a) a liquid crystal material (30) contained between two parallel substrates (20, 40), the substrates being provided with electrodes on their facing inside surfaces in order to enable an electric field to be applied to said liquid crystal, at least the front substrate (20) and the front electrode being optically transparent;

b) alignment layers or treatments on the electrodes to orient the liquid crystal and enable at least two alternative distinct textures that are stable or metastable in the absence of a field to be implemented, in which one of the textures is either non-twisted or twisted with a total angle lying in the range - 90° to +90°, and the other texture presents additional twisting through an angle close to 180°;

c) means for applying electrical signals to the liquid crystal enabling it to switch between said distinct textures by breaking anchoring on at least one of the two substrates, and enabling the crystal to remain in either texture after the field has been removed;

d) a polarizer (10) associated with the front face of the device, placed inside or outside it, the device being **characterized by** the facts that it works in reflection, that the thickness $\underline{d}$ of the liquid crystal layer (30) is selected in such a manner that the optical delay $d \cdot \Delta n$ lies in the range $0.15 \lambda_0$ to $0.35 \lambda_0$, where $\lambda_0$ is the center wavelength of the working spectrum band of the display and $\triangle n$ is the birefringence of the liquid crystal for said wavelength, and in that the polarizer is oriented at an angle lying in the range 15° to 75° relative to the director of the liquid crystal on the front face of the device; that the device further comprises

e) a specular or diffusing reflective element (50) placed at the rear face of the liquid crystal, inside or outside the device, enabling light to pass twice through the device and return towards an observer or towards additional optical elements, and that a compensating plate (60) is introduced on the optical path between the polarizer (10) and the reflector (50) inside or outside the device, providing an optical delay $\Delta l$ less than $\lambda_0/12$ where $\lambda_0$ is the center wavelength of the working spectrum band.

2. A device according to claim 1, **characterized by** the fact that the liquid crystal material (30) comprises a liquid crystal or a liquid crystal mixture in a nematic phase.

3. A device according to claim 1, **characterized by** the fact that the liquid crystal material (30) comprises a liquid crystal or a liquid crystal mixture in a cholesteric or nematic phase doped with a chiral substance in order to enable the energies of certain textures amongst the stable or metastable textures to be brought closer together or be equalized.

4. A device according to any one of claims 1 to 3, **characterized by** the fact that the optical delay $d \cdot \Delta n$ of the liquid crystal (30) lies in the range $0.20 \lambda_0$ to $0.32 \lambda_0$, where $\lambda_0$ is the center wavelength of the working spectrum band.

5. A device according to any one of claims 1 to 4, **characterized by** the fact that the polarizer (10) is a linear polarizer or an elliptical polarizer.

6. A device according to any one of claims 1 to 5, **characterized by** the fact that at least one of the electrodes contains a plurality of different segments enabling a plurality of independent pixels to be made on the same substrate and in the same device.

7. A device according to claim 6, **characterized by** the fact that the independent pixels are provided with independent means for applying the field.

8. A device according to claim 6 or claim 7, **characterized by** the fact that the independent pixels are organized in a multiplexed passive matrix.

9. A device according to claim 6 or claim 7, **characterized by** the fact that the independent pixels are organized in a multiplexed active matrix.

10. A device according to any one of claims 1 to 9, **characterized by** the fact that the polarizer (10) is oriented at an angle close to 45° relative to the director of the liquid crystal on the front face of the device.

11. A device according to claim 10, **characterized by** the fact that the twist angle of the first texture is practically zero ($\Delta \phi \approx 0$).

12. A device according to any one of claims 1 to 11, **characterized by** the fact that the optical axis (62) of the compensating plate (60) is oriented at substantially 45° relative to the polarizer (10).

13. A device according to any one of claims 1 to 12, **characterized by** the fact that the liquid crystal (30) introduces an optical delay lying in the range 100 nm to 180 nm.

14. A device according to any one of claims 1 to 13, **characterized by** the fact that the compensating plate (60) introduced an optical delay of less than 50 nm.

**15.** A device according to any one of claims 1 to 14, **characterized by** the fact that the polarizer (10) is combined with the compensating plate (60) in the form of a single element so as to constitute an elliptical polarizer.

**16.** A device according to any one of claims 1 to 15, **characterized by** the fact that the thickness of the liquid crystal material (30) is less than 6 $\mu$m.

**Patentansprüche**

**1.** Bistabile Anzeigevorrichtung, umfassend:

a) ein Flüssigkristallmaterial (30), das zwischen zwei parallelen Substraten (20, 40) enthalten ist, die auf ihren inneren gegenüberliegenden Flächen mit Elektroden ausgestattet sind, um zu erlauben, ein elektrisches Feld an dem Flüssigkristall anzulegen, wobei wenigstens das frontale Substrat (20) und die frontale Elektrode optisch transparent sind,
b) Ausrichtungsschichten oder Ausrichtungsbehandlungen auf den Elektroden, die den Flüssigkristall ausrichten und die abwechselnde Realisierung wenigstens zweier unterschiedlicher stabiler oder metastabiler Texturen in Abwesenheit des Felds erlauben, wobei eine der Texturen entweder nicht verdreht ist oder um einen Gesamtwinkel zwischen -90° und +90° verdreht ist und die andere Textur eine zusätzliche Verdrehung um einen Winkel von etwa 180° aufweist,
c) Mittel, die ausgelegt sind, um am Flüssigkristall elektrische Signale anzulegen, die erlauben, durch Bruch der Verankerung an wenigstens einer der beiden Substrate zwischen den verschiedenen Texturen zu wechseln und in einer dazwischen nach der Entfernung des Feldes zu bleiben,
d) einen Polarisator (10), der zur Vorderseite der Vorrichtung gehört und im Inneren oder im Äußeren dieser platziert ist, **dadurch gekennzeichnet, dass** die Vorrichtung mit Reflexion arbeitet, dass die Dicke d der Flüssigkristallschicht (30) so gewählt ist, dass die optische Verzögerung d.$\Delta$n zwischen $0.15\lambda_0$ und $0.35\lambda_0$ liegt, wobei $\lambda_0$ die mittlere Wellenlänge des Nutzspektralbands der Anzeige und $\Delta$n die Birefringenz des Flüssigkristalls für diese Wellenlänge ist, und dass der Polarisator in einem Winkel zwischen 15° und 75° in Bezug auf den Direktor des Flüssigkristalls auf der Vorderseite der Vorrichtung ausgerichtet ist, und dass die Vorrichtung ferner umfasst
e) ein spiegelndes oder streuendes Reflexionselement (50), das auf der Hinterseite des Flüssigkristalls im Inneren oder im Äußeren der Vorrichtung platziert ist und dem Licht erlaubt, zwei Mal in die Vorrichtung einzutreten und zu einem Beobachter oder zu zusätzlichen optischen Elementen zurückzukehren und dass ein Kompensationsplättchen (60) in den optischen Weg zwischen den Polarisator (10) und dem Reflektor (50), im Inneren oder im Äußeren der Vorrichtung, mit einer optischen Verzögerung $\Delta$l kleiner als $\lambda_0/12$ eingeführt wird, wobei $\lambda_0$ die mittlere Wellenlänge des Nutzspektralbandes ist.

**2.** Vorrichtung gemäß Anspruch 1, **dadurch gekennzeichnet, dass** das Flüssigkristallmaterial (30) einen Flüssigkristall oder eine Flüssigkristallmischung in einer nematischen Phase umfasst.

**3.** Vorrichtung gemäß Anspruch 1, **dadurch gekennzeichnet, dass** das Flüssigkristallmaterial (30) einen Flüssigkristall oder eine Flüssigkristallmischung in einer cholesterischen oder nematischen Phase umfasst, die mit einer chiralen Substanz dotiert ist, um zu erlauben, die Energien bestimmter Texturen unter den stabilen oder metastabilen Texturen anzunähern oder auszugleichen.

**4.** Vorrichtung gemäß einem der Ansprüche 1 bis 3, **dadurch gekennzeichnet, dass** die optische Verzögerung d $\triangle$n der Flüssigkristallschicht (30) in den Grenzen $0,20 \cdot \lambda_0$ bis $0,32 \cdot \lambda_0$ ist, wobei $\lambda_0$ die mittlere Wellenlänge des Nutzspektralbandes ist.

**5.** Vorrichtung gemäß einem der Ansprüche 1 bis 4, **dadurch gekennzeichnet, dass** der Polarisator (10) ein linearer oder elliptischer Polarisator ist.

**6.** Vorrichtung gemäß einem der Ansprüche 1 bis 5, **dadurch gekennzeichnet, dass** wenigstens eine der Elektroden mehrere verschiedene Segmente enthält, um zu erlauben, mehrere unabhängige Bildelemente (Pixel) auf denselben Substraten und in derselben Vorrichtung zu realisieren.

7.  Vorrichtung gemäß Anspruch 6, **dadurch gekennzeichnet, dass** die unabhängigen Bildelemente (Pixel) mit unabhängigen Mitteln ausgestattet sind, um das Feld anzulegen.

8.  Vorrichtung gemäß einem der Ansprüche 6 oder 7, **dadurch gekennzeichnet, dass** die unabhängigen Bildelemente (Pixel) in einer passiven gemultiplexten Matrix organisiert sind.

9.  Vorrichtung gemäß einem der Ansprüche 6 oder 7, **dadurch gekennzeichnet, dass** die unabhängigen Bildelemente (Pixel) in einer aktiven gemultiplexten Matrix organisiert sind.

10. Vorrichtung gemäß einem der Ansprüche 1 bis 9, **dadurch gekennzeichnet, dass** der Polarisator (10) in einem Winkel von etwa 45° in Bezug auf den Direktor des Flüssigkristalls auf der Vorderseite der Vorrichtung ausgerichtet ist.

11. Vorrichtung gemäß Anspruch 10, **dadurch gekennzeichnet, dass** der Torsionswinkel der ersten Textur praktisch Null ($\Delta\Phi=0$) ist.

12. Vorrichtung gemäß einem der Ansprüche 1 bis 11, **dadurch gekennzeichnet, dass** die optische Achse (62) des Kompensationsplättchens im Wesentlichen unter 45° in Bezug auf den Polarisator (10) ausgerichtet ist.

13. Vorrichtung gemäß einem der Ansprüche 1 bis 12, **dadurch gekennzeichnet, dass** der Flüssigkristall (30) eine optische Verzögerung zwischen 100 nm und 180 nm einführt.

14. Vorrichtung gemäß einem der Ansprüche 1 bis 13, **dadurch gekennzeichnet, dass** das Kompensationsplättchen (60) eine optische Verzögerung kleiner als 50 nm einführt.

15. Vorrichtung gemäß einem der Ansprüche 1 bis 14, **dadurch gekennzeichnet, dass** der Polarisator (10) mit dem Kompensationsplättchen (60) in der Form eines einzigen Elements kombiniert ist, um einen elliptischen Polarisator zu realisieren.

16. Vorrichtung gemäß einem der Ansprüche 1 bis 15, **dadurch gekennzeichnet, dass** die Dicke des Flüssigkristallmaterials (30) kleiner als 6$\mu$m ist.

U          H          T

$\vec{E}$

FIGURE 1

FIGURE 2

FIGURE 3

FIGURE 4

FIGURE 5

FIGURE 6

FIGURE 7

Etat tordu de $\Delta \Phi_0 + \pi$

Etat tordu de $\Delta \Phi_0 - \pi$

FIGURE 8

FIGURE 9

Diagramme de cromaticité CIE 1964
( illuminateur standard D65 )

d·Δn=137nm

FIGURE 10

FIGURE 11

FIGURE 12

FIGURE 13

FIGURE 14

FIGURE 15

FIGURE 16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 11344730 A, SAMSUNG DISPLAY DEVICES CO LTD

- FR 2740894 A

**Littérature non-brevet citée dans la description**

- **I. DOZOV et al.** FAST BISTABLE NEMATIC DISPLAY FROM COUPLED SURFACE ANCHORING BREAKING. *Proceedings of the Spie,* 01 Février 1997, vol. 3015, 61-69

- *PATENT ABSTRACTS OF JAPAN,* 30 Mars 2000, vol. 2000, 03
- **H. L. ONG.** Optical properties of general twisted nematic liquid-crystal displays. *Appl. Phys. Lett.,* Novembre 1987, vol. 51 (18